# EUROPEAN PATENT APPLICATION

(11) **EP 1 351 097 A2**
(43) Date of publication of application: **08.10.2003**
(21) Application number: 03100927.7
(22) Date of filing: 07.04.2003
(51) Int. Cl.: G03F 9/00

(54) **System and method for calibrating a laser line illumination system for use in imaging systems**

(30) Priority: 05.04.2002 US 117393
(71) Applicant: Agfa Corporation, Ridgefield Park, NJ 07660-2199 (US)
(72) Inventor: Allen, Roy, North Andover, MA 01845 (US); Kiermeier, Arnfried, D-81539, Muenchen (DE); Nolan, John, Bradford, MA 01835 (US)
(74) Representative: Van Ostaeyen, Marc Albert Jozef

(57) **Abstract**

A calibration system is disclosed for use with an imaging system including a laser line illumination source (10). The calibration system includes an imaging head (16), a mask (24) having a calibration opening (26) through which a portion of the line of laser illumination (10) may pass, and a calibration unit (20). The imaging head (16) is movable along a slow scan direction with respect to an imaging surface (18) for imaging a line of laser illumination (22) in the slow scan direction. The calibration opening (26) has a width in the slow scan direction that is larger than a full width half maximum distance of an imaging spot of a smallest addressable picture element of the line of laser illumination (22). The calibration unit (20) is for receiving a portion of the line of laser illumination (22) through the calibration opening (26) and for processing the received portion of the line of laser illumination (22).

## Description

### FIELD OF THE INVENTION

The present invention generally relates to the field of laser line illumination systems, and specifically relates to systems and methods for measuring the quality of an illumination field from a laser line illumination system.

### BACKGROUND OF THE INVENTION

Laser line illumination systems generally employ an array of light sources, such as light emitting diodes, coupled with optics that produce a laser illumination field in the shape of a line. The optics may include a variety of optical elements including for example, lenses, micro-lenses, and mirrors, as well as fiber optic cables.

Such systems may be used for a numerous applications, such as in imaging systems in which the laser line is used to simultaneously image a plurality of picture elements. In such systems, the illumination field may be directed toward a light modulator that modulates the illumination field by either selectively reflecting or transmitting specified portions of the illumination field. The modulated illumination field is then directed toward an imaging surface in which a portion of imageable media is selectively imaged. Either the illumination field or the imaging surface (such as a drum) is then moved with respect to the other so that further portions of the imageable media may then be successively imaged.

Non-uniformities in the illumination field of a laser line illumination system may result in significant imaging inconsistencies that may be difficult to detect or correct. Moreover, signal noise from the imaging system may also affect the quality of the modulated illumination field that reaches the imageable media. It is desirable that such laser line illumination systems produce an illumination field that has a uniform shape and power distribution for each separately addressable picture element (or pixel) of the imaging system.

Because laser line illumination systems may produce laser lines with such non-uniformities and because imaging systems may produce a modulated illumination field that is non-uniform due to system noise, certain imaging systems employ calibration systems for modifying or adjusting the line of laser illumination and/or the modulator. Such calibration systems typically image a portion of the laser line through a shutter while the shutter is in a fixed position with respect to the imaging head. The power of the signal from each pixel is determined, for example from the full width half maximum (FWHM) value of the signal associated with each pixel and this width is typically at least as large as the shutter opening. The system then adjusts the power of the various pixels so that they all have the same power, for example by separately addressing a digital-to-analog converter (DAC) that is associated with each light source or modifying the actuation of the modulator.

Such systems, however, have been found to not sufficiently remedy all non-uniformities in imaging systems employing laser line illumination fields. It has been found that the energy recorded for an individual pixel varies somewhat with time and may vary significantly as the temperature of the system increases or as the average laser power is adjusted to match media exposure requirements. Although certain systems employ time averaging of sample calibration signals, it is not always practical to record a large number of calibration readings for a single pixel. Moreover, in some imaging systems it is not practical to position the line of illumination in a static position over a shutter opening for the required period of time. This may be due to the ability of the imaging head to hold a position with accuracy and/or to the power requirements of the imaging system.

There is a need therefore, for an improved system and method of detecting non-uniformities, and calibrating to correct for non-uniformities, in laser line illumination fields in imaging systems.

### SUMMARY OF THE INVENTION

The above-mentioned advantegeous effects are realised by an imaging system having the specific features set out in claim 1 and by a method for calibrating having the specific features set out in claim 6. Specific features for preferred embodiments of the invention are set out in the dependent claims.

The invention provides a calibration system for use with an imaging system including a laser line illumination source. The calibration system includes an imaging head, a mask having a calibration opening through which a portion of the line of laser illumination may pass, and a calibration unit. The imaging head is movable along a slow scan direction with respect to an imaging surface for imaging a line of laser illumination in the slow scan direction. The calibration opening has a width in the slow scan direction that is larger than a full width half maximum distance of an imaging spot of a smallest addressable picture element of the line of laser illumination. The calibration unit is for receiving a portion of the line of laser illumination through the calibration opening and for processing the received portion of the line of laser illumination.

### BRIEF DESCRIPTION OF THE DRAWINGS

The following description may be further understood with reference to the accompanying drawings in which:
Figure 1 shows an illustrative diagrammatic view of functional components of an imaging system including a calibration system in accordance with an embodiment of the invention;
Figure 2 shows an illustrative diagrammatic front view of a calibration system in accordance with an embodiment of the invention;
Figure 3 shows an illustrative diagrammatic side view of the calibration system of Figure 2 taken along line 3 - 3 thereof;
Figure 4 shows an illustrative diagrammatic graphical view of calibration signals in accordance with an embodiment of the invention;
Figure 5 shows an illustrative diagrammatic graphical view of uncalibrated signals received at a calibration unit in response to the calibration signals of Figure 4;
Figure 6 shows an illustrative diagrammatic graphical view of the functional relationship of certain components of an imaging system that includes a calibration system of the invention;
Figure 7 shows an illustrative diagrammatic graphical view of the signals of Figure 5 following calibration;
Figures 8A - 8C show illustrative flowcharts of the steps during operation of a system of the invention;
Figure 9 shows an illustrative diagrammatic graphical view of a modulated calibration signal in accordance with a further embodiment of the invention;
Figure 10 shows an illustrative diagrammatic graphical view of an uncalibrated response signal that may be produced by the calibration signal of Figure 9;
Figure 11 shows an illustrative diagrammatic graphical view of a the signal of Figure 10 following calibration; and
Figure 12 shows an illustrative diagrammatic graphical view of received signals prior to calibration using an un-modulated calibration signal and a modulated calibration signal.

The drawings are shown for illustrative purposes only and are not to scale.

### DETAILED DESCRIPTION OF THE INVENTION

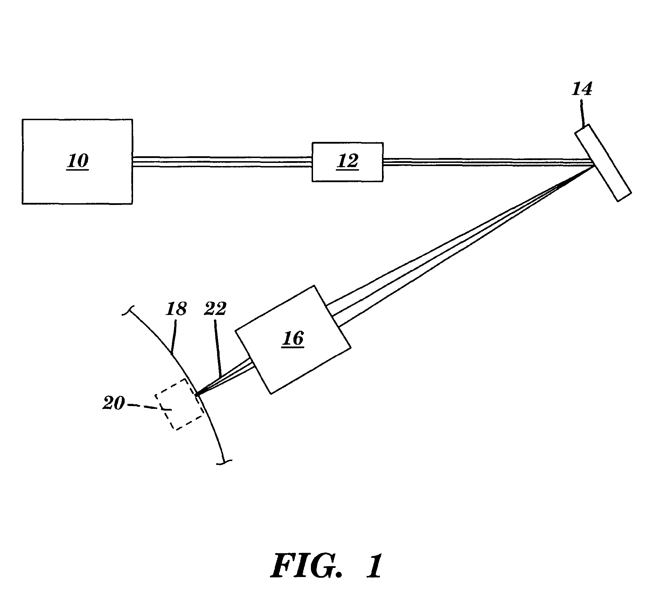

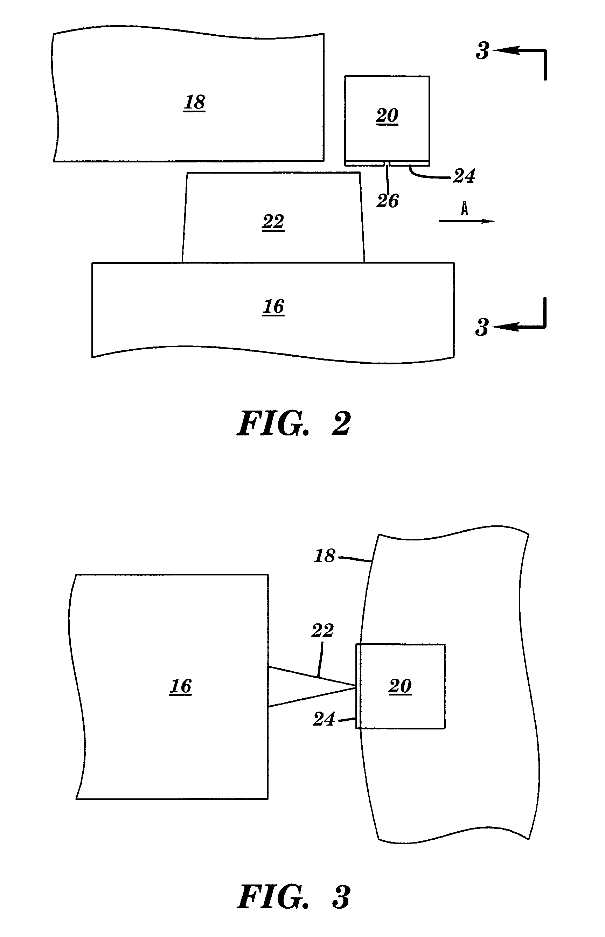

As shown in Figure 1, an imaging system incorporating a calibration system in accordance with an embodiment of the invention includes an illumination source 10 such as an array of laser emitters and associated optics, a field lens system 12 including one or more field lenses, a light modulator 14, an imaging head 16 including imaging optics, and an imaging drum for supporting a recording medium 18. Generally, the illumination field is selectively focused onto the recording medium to produce a desired image. The system also includes a calibration unit 20 adjacent one side of the imaging drum as further shown in Figures 2 and 3. The illumination source 10 generates and emits a line of continuous wave energy. The light modulator 14 shown in Figure 1 is reflective, and in a preferred embodiment comprises a reflective grating light valve (GLV). For example, the zero order diffraction of the illumination field from a GLV may be imaged onto the thermal recording medium by the imaging optics and the higher order diffraction images may be blocked by appropriate optical devices. The imaging optics 16 transfer the image from the light modulator 14 to the recording medium 18 via the illumination field 22.

As shown in Figures 2 and 3, an imaging system including a calibration system of the invention includes the calibration unit 20 that is positioned adjacent the drum supporting the recording medium 18. The calibration unit 20 includes a mask 24 having a slit or calibration openeing 26 therein through which a portion of the illumination field 22 may pass as the imaging head 16 is moved in the slow scan direction as generally indicated at A. In various embodiments the slit opening may instead be an etched portion of opaque glass that permits the illumination field to enter the calibration unit. By FWHM is meant: the full width half maximum distance of an imaging spot of a smallest addressable picture element of the line of laser illumination. The width of the slit opening may be larger than the FWHM distance (or 1/e² distance) for the smallest addressable pixel of the system. For example, the slit opening may be 2 or 3 times the FWHM distance (or 1/e² distance).
In further embodiments the slit may be tinted to uniformly reduce the amount of power that reaches the calibration unit. In yet further embodiments, the slit opening may have a non-rectangular shape and may even be non-symmetrical to provide further information to the calibration unit. The calibration unit is positioned with the slit in the image plane of the recording medium as shown in Figure 3 such that a portion of the image field passes through the slit opening when the illumination field is scanned over the slit in the direction indicated at A.

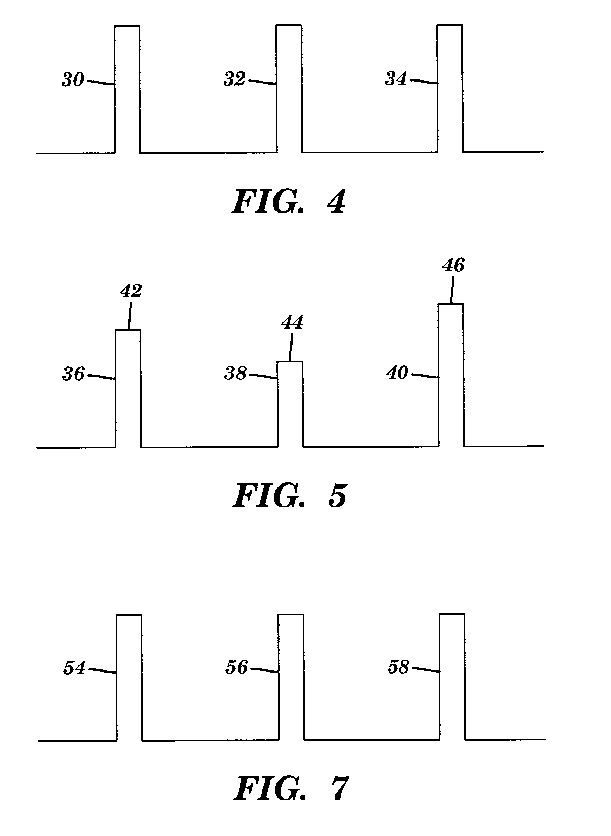

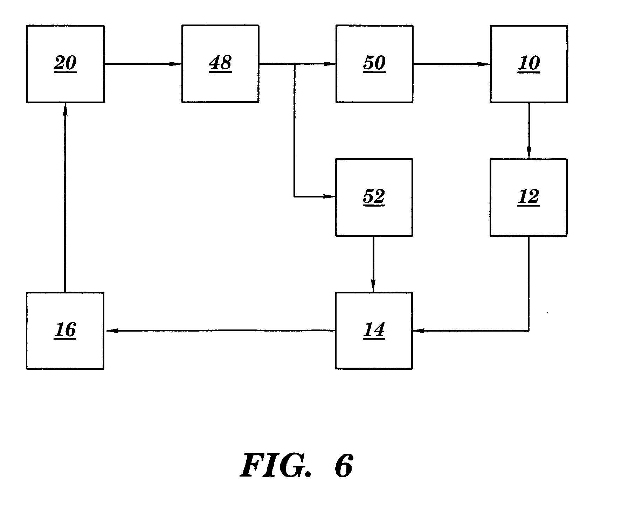

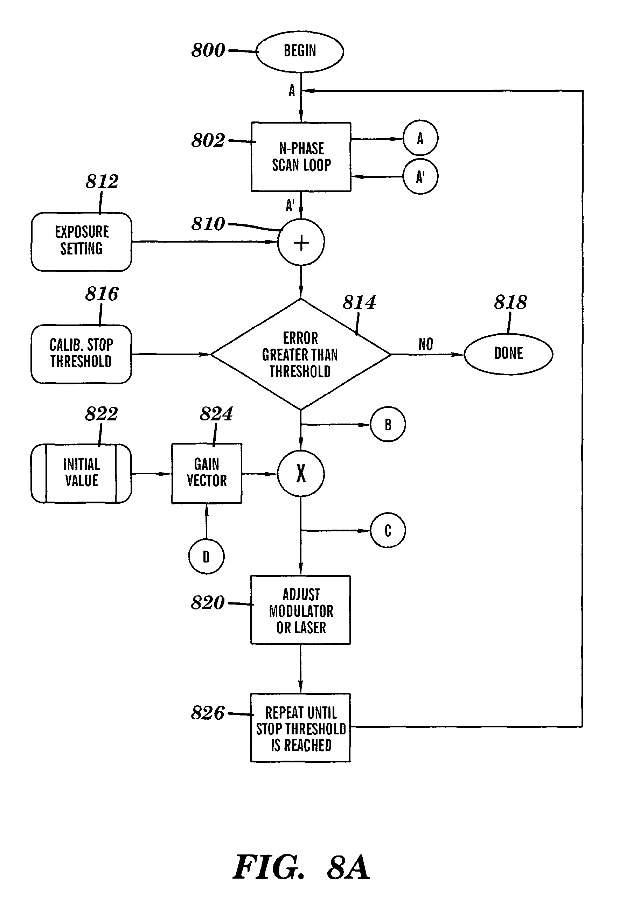

The illumination field may be scanned over the slit while every nth pixel of the line is illuminated. For example, every 4th pixel may be illuminated (i.e., the 1st, 5th, 9th, etc.). The width between each illuminated pixel is, therefore, larger than the width of the slit opening thereby providing a reliable means of pixel identification. In this example, four separate scans would be required to measure the illumination of all the pixels in the array. These scans would typically be performed in sequence to produce a composite signal representing the peak intensities of all the pixels in the illumination field. As each illuminated pixel is passed over the slit opening, the calibration signal will be produced as a series of pulses 30, 32 and 34 as shown in Figure 4 for the length of the illumination line. The signal received at a detector within the unit 20 may appear as generally illustrated in Figure 5. The maximum value for each received pulse 36, 38, 40 is then identified as shown in Figure 5 at 42, 44 and 46 by a signal processor 48 as shown in Figure 6. The system then records the maximum value for the next set of every nth pixel, (e.g., 2, 6, 10 etc.) until each pixel has been recorded. A target value is then determined for the entire illumination line, for example the mean value of the peaks, or an arbitrary exposure value less than the minimum peak value, and each pixel is adjusted to conform to this target value. Responsive to the maximum value for each pulse, the system may adjust either the illumination source 10 via adjustment unit 50 or the modulator 14 via adjustment unit 52 to modify the portion of the illumination field associated with each pulse. The entire process is then repeated (e.g., 4 or 5 times) until the signals for each of the pixels have been made sufficiently uniform as shown at 54, 65, 58 in Figure 7.

The signal processor produces a composite signal containing the measured peak values of all the pixels in the array. This intermediate signal is then compared with a target illumination pulse amplitude on a pixel-to-pixel basis. The uniformity error is defined as deviation from the pre-selected target peak amplitude which, in general, represents the exposure setting. The resultant error signal is inverted and multiplied by a pre-determined gain factor for the adjustment unit (50 or 52). This signal is then applied to the adjustment unit to reduce the deviation error for the given pixel. The initial pre-determined gain estimate of the adjustment unit may itself have some error, for example due to of pixel-to-pixel variations. To accommodate this, the cycle of scan-measure-adjust is repeated iteratively until the signals from each pulse have been made sufficiently uniform and equal to the target illumination value. Generally, convergence to this minimal error condition takes no more than 4 or 5 iterations. The beneficial effect of this approach is that gains for the individual pixel illumination adjustment mechanisms do not need to be known exactly and may be approximated by a single value for all pixels. The calibration routine may be employed at system startup, prior to each imaging operation, or during imaging by automatically scanning over the calibration unit and readjusting as necessary responsive to image amplitude or intensity recordings.

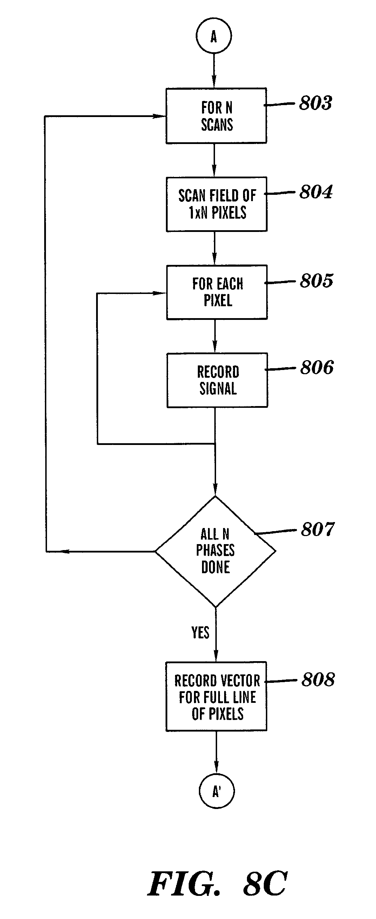

As specifically shown in Figures 8A - 8C a procedure for achieving calibration in accordance with an embodiment begins (step 800) by scanning all of the pixels (step 802) for example by scanning every 4th pixel in four separate passes starting first with the first, then starting with the second, then the third and finally starting with the fourth. In particular, and as shown in Figure 8C, the N-phase scan loop may include the steps of scanning for N times (step 803) the field of 1 x N pixels (step 804) and for each pixel (step 805), recording the received signal (step 806) until all N phases are recorded (step 807). The procedure then records a vector for the full line of pixels (step 808) and concludes step 802 in Figure 8A.

A uniformity deviation error is then produced (step 810) responsive the uniformity deviation vector and an exposure setting input parameter (step 812). If the error does not exceed a threshold (step 814) based on a calibration stop threshold input parameter (step 816), then the procedure ends (step 818).
Otherwise, the system proceeds by adjusting either the modulator or line illumination source (step 820) responsive to an initial value input parameter (step 822) and a gain vector (step 824). The procedure is repeated (step 826) several times, e.g., four or five times, until the error is not greater than the threshold (step 814).

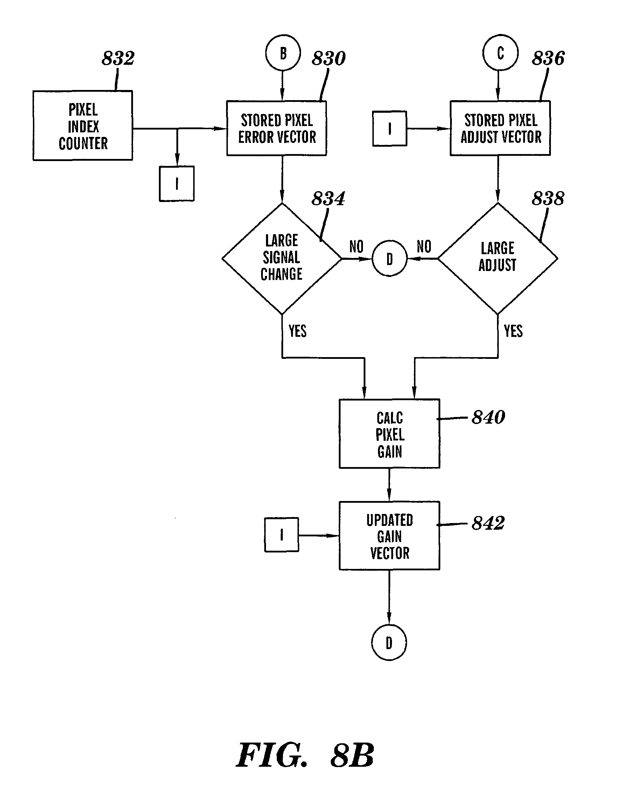

In further embodiments, the system may optionally determine whether the responsive changes in adjustment and received signals were large, e.g., greater than 3 % or 4 %. These two differential values comprise a local gain measurement of the sensing/adjusting mechanism. The threshold limits prevent the algorithm from erroneously updating because of transient noise effects or because the limits of adjustment have been reached (e.g., saturation). In particular, as shown in Figure 8B, in an embodiment the procedure may employ an automatic gain procedure that references a stored pixel error vector (step 830) responsive to a pixel index counter (step 832) to determine whether the most recent signal change was large (step 834). The procedure also references a stored pixel adjustment vector (step 836) responsive to the pixel index counter (step 832) to determine whether the adjustment was relatively large (step 838). Responsive to these two changes being large (step 840) the procedure calculates a pixel gain and responsive to the pixel index counter updates the gain vector with the new pixel gain (step 842) and returns to step 824 of Figure 8A. In further embodiments, a running average value of the gain measured at each iteration (except the first) for a given pixel may be recorded and used as the local adjustment mechanism gain.

It has further been found that certain non-uniformities in the illumination field may be due to characteristics relating to the dynamic performance of the modulator array, for example, pixel-to-pixel variations in modulation duty cycle or pulse width of each pixel in the fast scan axis (the axis orthogonal to the axis of the modulator array). These non-uniformities ordinarily only produce visible artifacts on the exposed media when writing high resolution halftone tint patterns, such as a 2x2 pixel checkerboard or the like. High performance imaging systems typically use such patterns as the final check of copy image quality.

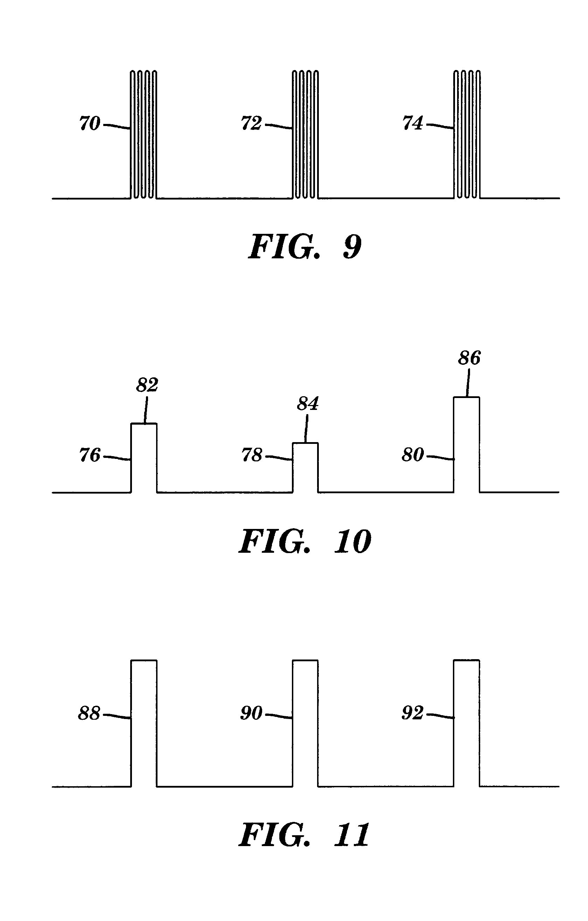

In accordance with a further embodiment of the invention, all of the illumination pixels may be modulated (e.g., turned on and off) at a high frequency equivalent of, for example, a 2x2 pixel fast scan modulation pattern as a means of more accurately replicating the copy quality test conditions during the calibration process. For example, the on-off modulation rate may be such that 100 modulation cycles occur within a time period equivalent to the time it takes for one pixel to traverse the slit opening during a scan as shown at 70, 72, 74 in Figure 9. A low pass filter (including for example, a resistor and a capacitor, or digital filtering) is then used at the detector to measure the average amplitude of the modulated signal for each pixel. The filtered received signal is shown at 76, 78, 80 in Figure 10 as having maximum values as indicated at 82, 84 and 86. The filtered received signals are then processed as discussed above with reference to Figures 4 - 8B. Following the calibration procedure, the resulting calibrated signals 88, 90, 92 are more uniform than the original signal as shown in Figure 11 similar to the resulting signals 54, 56, 58 in Figure 7. This procedure of using a modulated calibration signal provides that the modulation characteristics of each pixel are factored into the calibration process, and the procedure more closely imitates the conditions during imaging of most imaging systems.

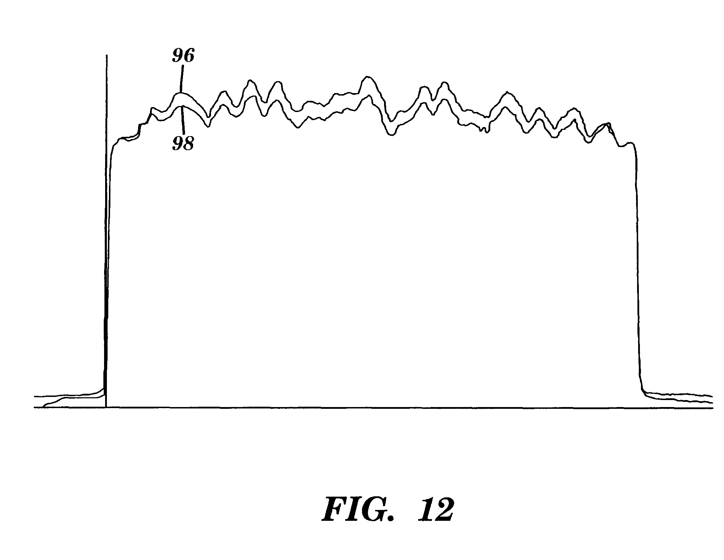

As shown in Figure 12, a comparison of an unmodulated calibration signal received at the detector 96 with a modulated calibration signal received at the detector 98 prior to the calibration procedure in a particular example shows that the signals may be different due a variety of factors including variations resulting from a light modulator. If the duty cycle of the modulated calibration signal is 50% and each pixel modulation is exactly in phase as received at the detector for each pixel, then the signals of Figure 12 should be identical to one another.

As discussed above, a preferred embodiment of a calibration method of the invention includes using a slit opening that is larger than the imaged spot profile for the smallest addressable element (pixel) of the multiple pixel illumination profile at the image plane. The result is that the entire exposure profile of each pixel, typically a Gaussian-like profile, passes through the slit opening at some point during the scan. The peak of the detected signal is, therefore, dependant only on the total energy within the pixel rather than on the additional factor of being convolved with a narrower slit opening whose exact width is either unknown or may vary due to secondary parameters such as heat, scan line tilt, slit edge irregularities, etc. Therefore, the peak reliably represents the integral of pixel flux density independent of variations in the slit width. This has been found to provide a significant contribution to calculation accuracy because it isolates the erroneous effects of scan line tilt and line straightness from the calibration intensity measurements. For example, cross axis tilt of the illumination field of just a fraction of a pixel can cause the imaged line to move up (or down) on the slit opening as it is scanned over the slit resulting in undesired slit width variations due to raggedness on the slit edges. An additional benefit of the larger slit is that it provides a degree of spatial filtering that further reduces the noise factors.

An optical imaging system including an illumination system of the invention is preferably used with an external drum imagesetter or platesetter, so that the image is transferred onto a medium supported by the external surface of the drum. The illumination system of the invention could also be used in direct-to-press imaging to project the line of illumination directly onto a plate cylinder of a printing press. In this case, the imaging system would be replicated at each station of the printing press. Furthermore, while the head may be used in the above-described applications, it may also be used in an internal drum or capstan style imagesetter or platesetter.

Those skilled in the art will appreciate that numerous modifications and variations may be made to the above disclosed embodiments without departing from the scope of the present invention.

## Claims

1. An imaging system including a calibration system and a laser line illumination source (10), said calibration system comprising:
- an imaging head (16) movable along a slow scan direction with respect to an imaging surface (18) for imaging a line of laser illumination (22) in said slow scan direction;
- a mask (24) having a calibration opening (26) therein through which a portion of said line of laser illumination (22) may pass, said calibration opening (26) having a width in the slow scan direction that is larger than a full width half maximum distance of an imaging spot of a smallest addressable picture element of said line of laser illumination (22); and
- a calibration unit (20) including a detector for receiving a portion of said line of laser illumination (22) through said calibration opening (26) and for processing (48) said received portion of said line of laser illumination (22).

2. The imaging system according to claim 1, wherein said calibration system further includes a calibration signal source (812) for producing a calibration signal at said imaging head (16), said calibration signal source (812) for providing that every nth picture element of said line of laser illumination (22) is illuminated where n is greater than 1.

3. The imaging system accoding to claim 2, wherein said calibration signal is modulated for each of every nth picture element.

4. The imaging system according to any one of the previous claims, wherein said calibration unit (20) is for further providing a processing output signal (48) and said calibration system further includes an adjustment unit (50) for adjusting at least a portion of said line of laser illumination (22) responsive to said processing output signal (48), wherein said adjustment unit (50) is coupled to the laser line illumination source (10) or wherein said adjustment unit (52) is coupled to a laser line illumination modulator (14).

5. The imaging system according to any one of the previous claims, wherein said calibration unit (20) further includes a low pass filter for filtering a received modulated signal for every picture element.

6. A method of calibrating a laser line illumination signal (22) in an imaging system, said method comprising the steps of:
- providing a calibration signal at an imaging surface (18), said calibration signal providing that every nth picture element of a laser illumination line (22) is illuminated where n is greater than 2;
- passing the laser illumination line (22) with every nth picture element illuminated over a mask (24) having a calibration opening (26) therein through which illumination for each picture element may pass as the laser illumination line (22) is moved in a slow scan direction, said calibration opening (26) having a width in the slow scan direction that is larger than a width of the illumination for each picture element;
- receiving the illumination for each picture element through said calibration opening (26); and
- processing illumination for each picture element received through said calibration opening at least in part by identifying a maximum amplitude of a received illumination signal for each picture element.

7. The method according to claim 6, wherein said step of providing a calibration signal includes modulating said calibration signal for each of every nth picture element.

8. The method according to claim 7, wherein said step of processing said illumination for each picture element received through said calibration opening includes filtering a received modulated signal for every nth picture element.

9. The method according to any one of claim 6 to 8, wherein said method further includes the step of adjusting a portion of said line of laser illumination (22) corresponding to a picture element by adjusting a laser line illumination source (10) or by adjusting a light modulator (14).
